(19) Europäisches Patentamt
European Patent Office
Office européen des brevets

(11) Veröffentlichungsnummer: **0 102 501**
**B1**

(12) # EUROPÄISCHE PATENTSCHRIFT

(45) Veröffentlichungstag der Patentschrift: **23.10.85**

(51) Int. Cl.[4]: **C 09 D 3/58**, C 09 D 3/72, C 09 D 5/44, C 25 D 13/06, C 08 G 18/00

(21) Anmeldenummer: **83107260.8**

(22) Anmeldetag: **25.07.83**

(54) **Hitzehärtbare Bindemittelmischung.**

(30) Priorität: **07.09.82 DE 3233139**
**24.06.83 DE 3322766**

(43) Veröffentlichungstag der Anmeldung: **14.03.84 Patentblatt 84/11**

(45) Bekanntmachung des Hinweises auf die Patenterteilung: **23.10.85 Patentblatt 85/43**

(84) Benannte Vertragsstaaten: **AT BE CH DE FR GB IT LI NL SE**

(56) *Entgegenhaltungen:*
**EP - A - 0 004 090**
**EP - A - 0 012 463**
**EP - A - 0 025 554**
**EP - A - 0 025 555**
**EP - A - 0 093 241**

(73) Patentinhaber: **BASF Farben + Fasern Aktiengesellschaft, Am Neumarkt 30, D-2000 Hamburg 70 (DE)**

(72) Erfinder: **Geist, Michael, Dr. Dipl.-Chem., Rubensstrasse 251, D-4400 Münster (DE)**
Erfinder: **Diefenbach, Horst, Dr. Dipl.-Chem., Am Lerchenhain 8, D-4405 Nottuln (DE)**

(74) Vertreter: **Habbel, Hans-Georg, Dipl.-Ing., Postfach 3429 Am Kanonengraben 11, D-4400 Münster (DE)**

**EP 0 102 501 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft eine hitzehärtbare Bindemittelmischung auf Basis eines Hydroxylgruppen enthaltenden organischen Harzes.

Zur Härtung durch Vernetzung der Bindemittel in Lackfilmen wurden vielerlei chemische Reaktionen vorgeschlagen und auch eingesetzt. Die während der Vernetzungsreaktion entstehenden chemischen Bindungen genügen häufig nicht allen Anforderungen, die an die Lackfilme gestellt werden.

Bei 2-Komponenten-Systemen muß man oft eine der reaktiven Gruppen verkappen, um eine frühzeitige Reaktion zu unterbinden. Die während des Einbrennens dann freiwerdenden Verbindungen belasten, insbesondere im Falle von Aminen oder Phenolen, die Umwelt.

Für die Grundierung von elektrisch leitfähigen Substraten hat in den letzten Jahren die Elektrotauchlackierung weite Verbreitung gefunden. Im Vordergrund stand bisher die anodische Elektrotauchgrundierung. Die hierfür eingesetzten Harzbindemittel gehören zu den Carboxylgruppen enthaltenden Harzen, z. B. zu den Maleinatölen, maleinisierten Epoxidharzen, Alkydharzen, Acrylharzen und insbesondere zu den maleinisierten Polybutadienen. Durch Salzbildung, vornehmlich mit Aminen, wurden diese Harze wasserlöslich gemacht und an der Anode im Elektrotauchbad durch den Strom abgeschieden. Das anodische Elektrotauchgrundierungsverfahren enthält jedoch schwerwiegende Nachteile. So wird während der elektrischen Abscheidung an der Anode Sauerstoff entwickelt, der die sich an der Anode abscheidenden Harze in schwerwiegender, nachteiliger Art und Weise verändern kann. Desweiteren gehen an der Anode Metallionen in Lösung, die im eingebrannten Film als Störstellen enthalten sind. Die Metallionen können zur Verfärbung und Fleckenbildung führen. Qualitative Nachteile verursachen sie insbesondere durch Salzbildung und damit durch Herabsetzung der Wasserfestigkeit und des Korrosionsschutzes.

Das in den letzten Jahren zur Marktreife entwickelte kathodische Elektrotauchgrundierverfahren verdrängt in zunehmendem Maße das anodische Verfahren, da die oben beschriebenen Mängel weitgehend vermieden werden. So bildet sich an der Kathode, an der nun der Lackfilm abgeschieden wird, während des Abscheidevorganges Wasserstoff, der das Harzbindemittel nicht beeinflußt. Da im annähernd neutralen pH-Bereich die kathodische Abscheidung erfolgen kann, gehen kaum Metallionen in Lösung. Die für die kathodische Abscheidung geeigneten Bindemittel enthalten überwiegend Aminogruppen, die zur Wasserlöslichmachung mit Säuren neutralisiert werden.

Aus der EP 12 463 B1 sind Bindemittel bekannt, die durch die Umesterung von $\beta$-Hydroxyalkylestergruppen enthaltenden Vernetzungsmitteln die hydroxylgruppenhaltigen harzartigen Verbindungen vernetzen. Diese Umesterung erfordert jedoch große Mengen an Schwermetallsalzen als Härtungskatalysatoren.

Es ist Aufgabe der Erfindung, diesen Nachteil des Standes der Technik zu vermeiden und eine Bindemittelmischung zur Herstellung von Überzugsmitteln zu schaffen, deren Komponenten eine erhöhte Reaktivität aufweisen. Durch die erfindungsgemäße Bindemittelmischung soll die Umweltbelastung bei der Applikation der entsprechenden Überzugsmittel herabgesetzt werden. Die Überzugsmittel auf Basis der erfindungsgemäßen Bindemittelmischung sollen ferner für alle Arten von Applikationsverfahren geeignet sein, d. h. die Bindemittelmischung soll für konventionell zu applizierende Einbrennlacke, für Pulverlacke und für wäßrige Pulver-Slurries verwendet werden können. Nach Einbau von solubilisierenden Gruppen soll die Bindemittelmischung für das Elektrotauchlackierverfahren geeignet sein. Diese Aufgabe wird bei einer Bindemittelmischung der eingangs genannten Art erfindungsgemäß dadurch gelöst, daß sie aus den Komponenten

A) einem organischen, nicht sauren Harz mit einem Hydroxylgruppengehalt von wenigstens 0,2 Äquivalent in 100 g Harz und mit einem Molekulargewicht von wenigstens 850

B) einem Vernetzungsmittel auf Basis einer organischen Verbindung, die mindestens 2 Carbalkoxymethylestergruppen pro Molekül enthält, besteht.

Die Bindemittelmischung enthält vorteilhaft zusätzlich zu den Komponenten A und B als Komponente C Pigmente, Füllstoffe, Vernetzungskatalysatoren, Korrosionsschutzinhibitoren und weitere Lackhilfsmittel.

Vorteilhaft betragen der Anteil der Komponente A 50—95 Gew.-% und der der Komponente B 5—50 Gew.-%, wobei die Summe der Komponenten A und B 100% beträgt.

Während des Einbrennvorganges reagieren nun die Carbalkoxymethylestergruppen der Komponente B mit den Hydroxylgruppen der Komponente A unter Bildung einer Esterbindung. Der Vernetzungsmechanismus ist im Prinzip in folgendem Reaktionsschema beschrieben:

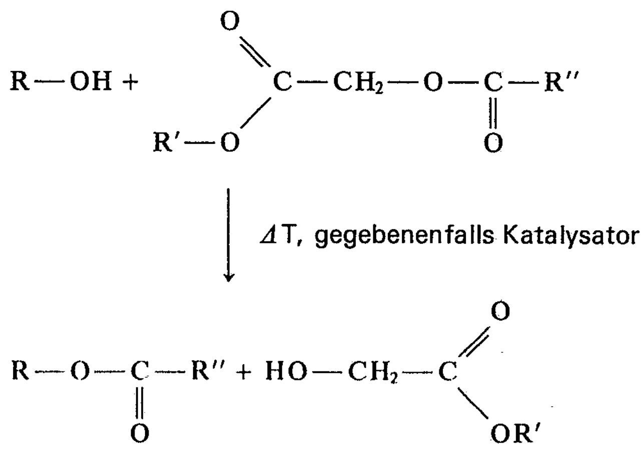

Die abgespaltenen Hydroxyessigsäureester weisen vorzugsweise so einen Siedepunkt auf, der sie während des Einbrennvorganges vorteilhaft als Verlaufshilfsmittel wirken läßt.

Die während des Einbrennens entstehende Esterbindung wirkt sich sehr vorteilhaft auf die Haftung des Films, insbesondere auf Metallsubstraten, aus. Ebenso wird hierdurch die Elastizität des Filmes gesteigert. Dieser Vernetzungsmechanismus bedingt eine hohe Beständigkeit des Lackfilms gegen Lösungsmittel, Alkalien und Salzsprühnebel. Bereits auf nicht vorbehandeltem Eisenblech bilden die Filme auch ohne Korrosionsschutzinhibitoren sehr resistente Überzüge aus.

Die Komponente A der Bindemittelmischung weist vorteilhaft eine zahlenmittlere Molmasse von 850 bis 20 000 auf, vorzugsweise von 1000 bis 10 000. Insbesondere bei Verwendung der Bindemittelmischung für das Elektrotauchlackierverfahren enthält die Komponente A primäre und/oder sekundäre Aminogruppen zusätzlich zu den Hydroxylgruppen. Gegebenenfalls können zusätzlich auch tertiäre Aminogruppen und quartäre Ammoniumgruppen vorhanden sein.

Die Anwesenheit von primären oder sekundären Aminogruppen neben den Hydroxylgruppen in der Komponente A ist aber nicht nur unter dem Gesichtspunkt der Solubilisierung der Harze in wäßrigen Elektrotauchbädern von Bedeutung. Die primären und sekundären Aminogruppen tragen auch zur Vernetzung bei, indem sie beim Einbrennen mit den Carbalkoxymethylestergruppen der Komponente B unter Bildung von Amidverbindungen reagieren. Hierdurch wird eine sehr wirkungsvolle Vernetzung erreicht, und die resultierenden Überzüge geben einen ausgezeichneten Korrosionsschutz. Auch die Lagerstabilität und die Stabilität der mit diesen Bindemitteln hergestellten Elektrotauchbäder sind verbessert. Bindemittelmischungen, deren Komponente A neben den Hydroxylgruppen gleichzeitig primäre und/oder sekundäre Aminogruppen enthält, stellen also eine besonders vorteilhafte Ausgestaltung der Erfindung dar.

Das Einführen von primären und/oder sekundären Aminogruppen in das organische Harz zur Herstellung der Komponente A erfolgt vorzugsweise durch Reaktion eines Polyamins und/oder eines amino- und/oder hydroxylgruppenhaltigen Ketimins mit Harzen, die mindestens eine, vorzugsweise zwei Epoxidgruppen oder Isocyanatgruppen je Molekül enthalten.

Die Komponente A kann aber auch durch andere Anlagerungsreaktionen erhalten werden, z. B. durch Verestern oder Amidieren von primäre und/oder sekundäre Aminogruppen tragende Verbindungen mit hierfür geeignete Gruppen enthaltende Harze.

Als besonders geeignet für die Herstellung der Komponente A erweisen sich epoxidgruppenhaltige Harze mit vorzugsweise endständigen Epoxidgruppen aus der Gruppe der Polyglycidylether, Polyglycidylester und der Polyglycidylamine.

Andere vorteilhaft geeignete epoxidgruppenhaltige Harze sind Copolymerisate von Acrylsäure- und/oder Methacrylsäureglycidylether oder einer anderen, eine Glycidylgruppe tragenden, olefinisch ungesättigten, polymerisierbaren Verbindung mit Alkyl- und/oder Hydroxyalkylestern der Acryl- und/ oder Methacrylsäure, und/oder Vinylverbindungen wie Styrol, Vinyltoluol oder Vinylcarbazol.

Eine weitere bevorzugt geeignete Harzgruppe sind teilepoxidierte Polybutadienöle.

Unter Polyglycidylether im Rahmen dieser Erfindung werden vorzugsweise solche Polyglycidylether der allgemeinen Formel

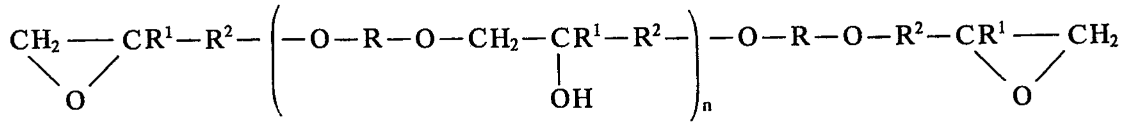

mit

R = 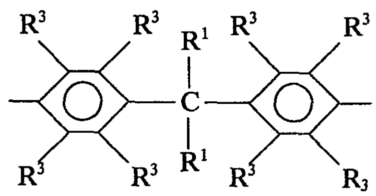

$R^1$ = H oder $C_nH_{2n+1}$

$R^2$ = $(CR^1_2)_n$

$R^3$ = $R^1$, Halogen und bevorzugt H
n = 0 bis 5

verstanden.

Die Polyglycidylether der aufgeführten allgemeinen Formel haben eine zahlenmittlere Molmasse von etwa 340 bis 5000 und dementsprechend ein Epoxidäquivalentgewicht von 170 bis 2500. Die Epoxidharze können auch hydriert oder teilhydriert eingesetzt werden. Zur Steuerung der Filmeigenschaften kann ein Teil der reaktionsfähigen Gruppen des Epoxidharzes mit anderen Verbindungen umgesetzt werden. Hierfür bieten sich an:

a) Carboxylgruppenhaltige Verbindungen wie gesättigte oder ungesättigte Monocarbonsäuren (z. B. Benzoesäure, Leinölfettsäure, 2-Ethylhexansäure, Versaticsäure), aliphatische, cycloaliphatische und/oder aromatische Dicarbonsäuren verschiedener Kettenlängen (z. B. Adipinsäure, Sebacinsäure, Isophthalsäure oder dimere Fettsäuren), Hydroxyalkylcarbonsäuren (z. B. Milchsäure, Dimethylolpropionsäure) sowie carboxylgruppenhaltige Polyester oder
b) Aminogruppenhaltige Verbindungen wie Diethylamin oder Ethylhexylamin oder Diamine mit sekundären Aminogruppen, wie z. B. N,N'-Dialkylalkylendiamin wie Dimethylethylendiamin, N,N-Dialkyl-polyoxialkylenamin wie N,N'-Dimethyl-polyoxipropylendiamin, Polyaminoamide wie Versamide oder das Umsetzungsprodukt von einem Mol Diaminohexan mit zwei Molen Monoglycidylether oder Monoglycidylester, speziell Glycidylester $\alpha$-verzweigter Fettsäuren wie der Versaticsäure, oder
c) Hydroxylgruppenhaltige Verbindungen wie Neopentylglykol, bisethoxyliertes Neopentylglykol, Hydroxypivalinsäureneopentylglykolester, Hexandiol-1,6, Hexandiol-2,5, 1,4-Bis-(hydroxymethyl)-cyclohexan, 1,1-Isopropyliden-bis-(p-phenoxy)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin sowie auch Polyglykolether, Polyesterpolyole, Polyetherpolyole, Polycaprolactonpolyole verschiedener Funktionalität und Molekulargewichte.

Anstelle der Polyglycidylether auf Basis Bisphenol A können auch Polyglycidylether auf Basis anderer Grundkomponenten wie Triglycidylisocyanurat, heterocyclische Diglycidylverbindungen oder Diglycidylhydantoine eingesetzt werden.

Als Polyglycidylester sind Umsetzungsprodukte von z. B. Terephthalsäurebisglycidylester oder Isophthalsäurebisglycidylester mit z. B. Bisphenol A geeignet. Das Epoxidäquivalentgewicht dieser Produkte liegt zwischen 200 bis 2500. Zur Steuerung der Filmeigenschaften kann ein Teil der verbliebenen, reaktiven Glycidylgruppen mit anderen Verbindungen umgesetzt werden. Hierfür bieten sich die oben unter a, b und c genannten Verbindungen an.

Unter Polyglycidylaminen werden solche glycidylgruppenhaltigen Harze verstanden, die man durch Einführung von Glycidylgruppen über z. B. Epichlorhydrin in $NH_2$-funktionelle Harze erhält.

Bevorzugt geeignet sind auch Copolymerisate von Acryl- und/oder Methacrylsäureglycidylester oder einer anderen, eine Glycidylgruppe tragende, olefinisch ungesättigten, polymerisierbaren Verbindung mit Estern der Acryl- und/oder Methacrylsäure sowie polymerisierbaren Vinylverbindungen, die eine zahlenmittlere Molmasse von 700 bis 10 000 und ein Epoxidäquivalentgewicht von 600 bis 3000

aufweisen. Bevorzugt sind die Acrylsäureester mit $C_2$ bis $C_8$-Alkohole und die Methacrylsäureester mit $C_1$ bis $C_4$-Alkohole. Die Copolymerisate können weitere Monomere enthalten wie Hydroxyalkyl(meth)acrylat oder (Meth)-acrylamid. Die Copolymerisation erfolgt in wohlbekannter Weise durch Lösungs-, Suspensions- oder Emulsionspolymerisation mit Zusatz radikalischer Initiatoren wie Peroxiden, Hydroperoxiden, Perestern oder thermolabiler Azoverbindungen sowie gegebenenfalls Molekulargewichtsreglern.

Unter teilepoxidierten Polybutadienölen werden Umsetzungsprodukte verstanden, die durch Reaktion von handelsüblichen Polybutadienölen mit Persäuren bzw. organischen Säure-$H_2O_2$-Mischungen erhalten werden. Die Darstellungsmethode wird z. B. in der Chemiker-Zeitung 95, 857 f. (1971) beschrieben.

Zur Herstellung wasserdispergierbarer Bindemittel werden die epoxidgruppenhaltigen Harze mit Polyaminen und/oder einem amino- und/oder hydroxylgruppenhaltigen Ketimin umgesetzt. Wird die Anlagerung der primären und sekundären Aminogruppen tragenden Verbindungen in Form ihrer Ketimine durchgeführt, so sind die Reaktionsbedingungen so zu führen, daß im Reaktionsprodukt keine die Ketimine zersetzende Substanzen verbleiben. Bei den bevorzugten Ketiminen handelt es sich um Umsetzungsprodukte aus Ketonen und Hydroxyl- oder sek. Aminogruppen enthaltende Alkylamine oder Alkyldiamine mit der allgemeinen Struktur $R-NH-R-NH_2$ bzw. $HO-R-NH_2$. Die Ketimine weisen z. B. folgende Struktur auf:

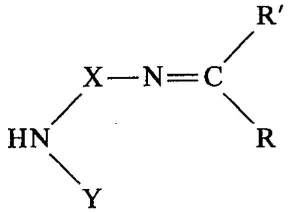

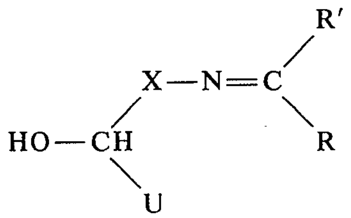

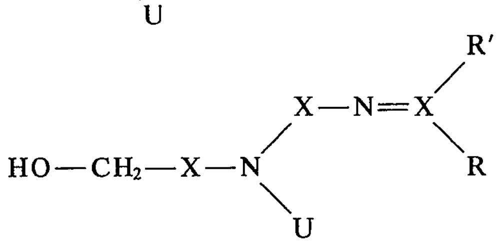

wobei bedeuten:

X $= -(CR_2)_n-$
R $= -H, -R'$
R' $= -C_mH_{2m+1}, -C_6H_{11}$
U $= -R, -Y$

Y = 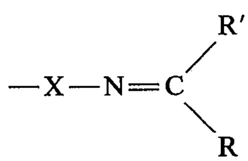 $-X-OH$ $-R'$ oder 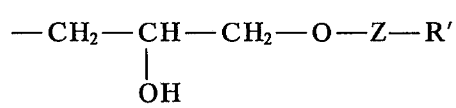

Z $= =CO, -X$
n $= 1-6$
m $= 1-12$

Die zur Reaktion mit den primären Aminogruppen eingesetzten Ketone sind im allgemeinen aliphatische Ketone wie Methylethylketon, Diethylketon, Methylisobutylketon, Ethyl-n-propylketon und cycloaliphatische Ketone wie Cyclopentanon und Cyclohexanon. Bei den bevorzugten Aminoalkylaminen und Alkanolaminen handelt es sich überwiegend um Diethylentriamin, N-Methyl-ethylendiamin, N-Methyl-propylendiamin, N-Aminoethyl-piperazin, 2-Aminoethanol, 1-Aminopropanol-2, 1-Aminopropanol-3, 2-Amino-2-methylpropanol-1, 3-Amino-2,2-dimethyl-propanol-1, 1,5-Diaminopentanol-3 oder N-(2-Aminoethyl)-N-(2-hydroxyethyl)-ethylendiamin.

Die exotherme Addition der oben beschriebenen Aminoketimine an die Epoxidgruppen des Basisharzes der Bindemittelkomponente A erfolgt im allgemeinen bei Raumtemperatur. Zur vollständigen Umsetzung wird die Reaktion häufig bei Temperaturen zwischen 50 und 125°C beendet.

Die Addition der Hydroxyketimine an die Epoxidgruppen des Basisharzes der Bindemittelkomponente A erfolgt in der Regel im gleichen Temperaturbereich, jedoch ist die Verwendung eines basischen Katalysators wie N,N-Dimethylbenzylamin oder auch eines Friedel-Crafts-Katalysators wie Zinn-II-Chlorid ratsam.

Die Einführung von reaktiven Hydroxylgruppen gelingt sehr leicht durch die Verwendung von sekundären Alkanolaminen wie Methylethanolamin, Diethanolamin, Diisopropanolamin, Butylethanolamin, Cyclohexylethanolamin u. dgl. Als Basisharz der Bindemittelkomponente A können auch Basisharze mit mindestens 2 Isocyanatgruppen eingesetzt werden. Bevorzugte Isocyanatgruppen enthaltende Harze sind höherfunktionelle Polyisocyanate, die durch Trimerisation oder Oligomerisation aus Diisocyanaten oder Polyisocyanaten und polyfunktionellen OH- oder NH-Gruppen enthaltenden Verbindungen dargestellt werden. Typische Isocyanate sind Toluylendiisocyanat, Hexamethyldiisocyanat, 4,4'-Diphenylmethandiisocyanat, 4,4'-Dicyclohexylmethandiisocyanat, 1,6-Diisocyanato-2,2,4-trimethylhexan und 1-Isocyanato-methyl-3-isocyanato-1,5,5-trimethylcyclohexan. Desweiteren können isocyanathaltige Präpolymere auf Basis von Polyglykolethern, Polyesterpolyolen, Polyetherpolyolen, Polycaprolactonpolyolen, Polycaprolactampolyolen oder Polyaminoamiden mit Vorteil eingesetzt werden.

Die Bindemittelkomponente B, das Vernetzungsmittel, ist eine Verbindung, die mindestens 2 Carbalkoxymethylestergruppen enthält. Das Vernetzungsmittel kann eine niedermolekulare Verbindung oder ein entsprechend substituiertes Harz sein. Wird zur Veresterung kein Alkohol mit einer zusätzlichen Estergruppe eingesetzt, sondern Monoalkohole wie Methyl-, Ethyl- oder Butylalkohol, so läuft die Umesterungsreaktion wesentlich langsamer ab. Die Vernetzungsrate ist in diesem Fall zu gering, der eingebrannte Film ist gegen Lösungsmittel nicht ausreichend beständig. Diese Nachteile werden umgangen, wenn erfindungsgemäß Carbalkoxymethylester zur Umesterungsreaktion eingesetzt werden. Die Verbindungen, die den Vernetzer bilden, sind bevorzugt Polyesterharze, es können aber auch andere Verbindungen eingesetzt werden, die freie Carboxylgruppen enthalten und einer Veresterung zugänglich sind.

Bevorzugt werden als Umesterungskomponente Poly-Carbalkoxymethylester von Polycarbonsäuren eingesetzt. Hierzu gehören neben anderen

Bis-(carbalkoxymethyl)-azelat
Bis-(carbalkoxymethyl)-sebacat
Bis-(carbalkoxymethyl)-adipat
Bis-(carbalkoxymethyl)-succinat
Bis-(carbalkoxymethyl)-terephthalat

Polyfunktionelle Vernetzer können vorteilhaft auf folgende Weise dargestellt werden. Zuerst werden äquivalente Anteile eines Dicarbonsäureanhydrids (Phthalsäureanhydrid, Hexahydrophthalsäureanhydrid, Trimellithsäureanhydrid, Succinsäurenanhydrid) mit einem Polyol (Glycerin, Trimethylolpropan, Pentaerythrit, Dipentaerythrit) bei Temperaturen unterhalb 145°C umgesetzt. Das entstandene saure Zwischenprodukt wird dann zum Endprodukt umgesetzt. Hierzu kann beispielsweise das saure Zwischenprodukt in das Ammoniumsalz überführt werden und dieses dann mit Monochloressigsäureester umgesetzt werden.

Vorteilhaft ist die Komponente B ein Polyacrylatharz aus den folgenden Monomeren:

a) 10—50 Gew.-% Acrylsäurealkylester mit 1 bis 18 Kohlenstoffatomen im Alkylrest und/oder Methacrylsäureester mit 2 bis 18 Kohlenstoffatomen im Alkylrest,
b) 0—60 Gew.-% Methacrylsäuremethylester,
c) 0—35 Gew.-% Styrol, $\alpha$-Methylstyrol, o- und/oder p-Chlorstyrol, p-tert.-Butylstyrol, Vinyltoluol und/oder Vinylcarbazol und
d) 2—35 Gew.-% Acrylsäure- und/oder Methacrylsäurecarbalkoxymethylester oder einer anderen, Carbalkoxymethylestergruppen enthaltenden, olefinisch ungesättigten, polymerisierbaren Verbindung, wobei die Summe der Bestandteile a, b, c und d 100% beträgt.

Die erfindungsgemäße Bindemittelmischung kann in feinteiliger, fester Form oder gelöst in einem organischen Lösungsmittel vorliegen.

Für die Elektrotauchlackierung ist es erforderlich, daß die Bindemittelmischung nach Protonisierung mit Säure in Form einer wäßrigen Lösung oder Dispersion vorliegt.

Die Wasserlöslichkeit der Bindemittelkomponente und/oder der Vernetzerkomponente wird durch Neutralisation der in ihnen enthaltenen primären, sekundären und/oder tertiären Aminogruppen mit Säuren bewirkt. Geeignete Säuren sind insbesondere organische Säuren, es kann jedoch auch beispielsweise Salzsäure oder Phosphorsäure eingesetzt werden. Bevorzugt werden die Aminogruppen mit Ameisensäure, Essigsäure, Malonsäure, Milchsäure oder Zitronensäure neutralisiert.

Die genannten Säuren können auch verwendet werden, wenn die Einführung der solubilisierenden Gruppen für die Bindemittelkomponente und/oder die Vernetzerkomponente durch Anlagerung einer Ammoniumgruppe oder dem Salz einer Sulfid/Säure- oder Phosphin-Säuremischung an das Bindemittel oder den Vernetzer erfolgt.

Der Neutralisationsgrad der solubilisierenden Gruppen liegt, bezogen auf diese Gruppen, zwischen 0,2 bis 1,0 Äquivalent und bevorzugt zwischen 0,25 bis 0,6 Äquivalente Säure.

Die Neutralisation kann auf folgenden Wegen durchgeführt werden. Die Säure wird in Wasser, gegebenenfalls zusammen mit Dispergierhilfsmittel, vorgelegt und die Harzlösung wird bei Raumtemperatur oder gegebenenfalls bei erhöhten Temperaturen in das Wasser eingerührt. Die Säure kann aber auch direkt der Harzlösung zugegeben werden. Die neutralisierte Harzlösung kann nun in das Wasser eingerührt werden, gegebenenfalls kann man das Wasser auch langsam in die Harzlösung einarbeiten.

Die Dispersion kann zur Steuerung ihrer Viskosität, der Abscheidespannung und des Verlaufs bis zu 20% organische Lösungsmittel enthalten. Enthält der Ansatz durch das gewählte Darstellungsverfahren zuviel oder gar für die Eigenschaften schädliche Lösungsmittel, so kann man diese vor dem Dispergieren aus der Harzlösung herausdestillieren oder man destilliert sie aus der wäßrigen Dispersion ab. Vorteilhaft für die Summe aller Eigenschaften ist ein möglichst geringer Anteil an organischen Lösungsmitteln.

Der Festkörper eines Abscheidebades, das mit der erfindungsgemäßen Dispersion angesetzt ist, beträgt 7—35 Gew.-Teile, bevorzugt aber 12—25 Gew.-Teile. Der pH-Wert des Abscheidebades liegt zwischen 4 und 8, vorzugsweise aber zwischen 5 und 7,5. Als Anoden des Abscheidebades werden nicht korrodierende Stahlanoden oder Graphitanoden verwendet. Die Temperatur des Badansatzes soll zwischen 15 bis 35° C, bevorzugt zwischen 20 und 30° C liegen. Die Abscheidedauer und -spannung werden so gewählt, daß die gewünschte Schichtstärke erreicht wird.

Nach der Abscheidung wird der beschichtete Gegenstand abgespült und ist zum Einbrennen bereit.

Unabhängig von dem Applikationsverfahren der auf Basis der erfindungsgemäßen Bindemittelmischung hergestellten Überzugsmittel erfolgt die Vernetzung des Lackfilms während des Einbrennens bei Temperaturen von 130 bis 200° C über eine Zeitdauer von 10—60 Minuten, bevorzugt bei 150 bis 180° C während 15—30 Minuten.

Die Vernetzungsreaktion kann durch geeignete Katalysatoren noch beschleunigt werden. Hierzu sind insbesondere geeignet Ammoniumverbindungen wie Benzyltrimethylammoniumhydroxid, Benzyltrimethylammoniumchlorid, Trimethylcetylammoniumbromid oder Tetraammoniumjodid und organische Zinnverbindungen wie Dibutylzinndilaurat und Eisen-III-acetylacetonat, Zinkacetat, Zink-2-ethylhexoat, Kobaltnaphthenat, Bleiacetat, Bleioctoat oder Butyltitanat. Wegen der hohen Reaktivität der Bindemittelkomponenten wird eine Beschleunigung der Vernetzungsreaktion bereits durch geringe Mengen Katalysator erreicht.

Die Pigmentierung erfolgt in wohlbekannter Weise. Hierbei werden die Pigmente sowie die üblichen Zusatzstoffe wie Füllstoffe, Korrosionsschutzinhibitoren und Antischaummittel (Komponente C) in einer der beiden Bindemittelkomponenten angemahlen. Als Mahlaggregate können z. B. Sandmühlen, Kugelmühlen oder Dreiwalzen verwendet werden. Die Komplettierung des Lackes kann, wie allgemein bekannt, erfolgen.

Die Einzelkomponenten A und B und gegebenenfalls die Komponente C können in Form ihrer konzentrierten Lösungen gemischt und gemeinsam dispergiert werden. Es ist aber auch möglich, die Komponenten A und B einzeln, wobei die Pigmente in A oder B angerieben sind, zu dispergieren und die Dispersion der Einzelkomponenten in dem erforderlichen Verhältnis zu vermischen.

Die Erfindung betrifft ferner ein Verfahren zum Herstellen von Überzügen durch Aufbringen eines Überzugsmittels auf ein Substrat in Form eines Filmes durch Einbrennen, wobei das Überzugsmittel eine Bindemittelmischung enthält, die dadurch gekennzeichnet ist, daß die Mischung aus den Komponenten

A) einem organischen, nicht sauren Harz mit einem Hydroxylgruppengehalt von wenigstens 0,2 Äquivalent in 100 g Harz und mit einem Molekulargewicht von wenigstens 850

B) einem Vernetzungsmittel auf Basis einer organischen Verbindung, die mindestens 2 Carbalkoxymethylestergruppen pro Molekül enthält, besteht.

Vorteilhafte Ausgestaltungen des erfindungsgemäßen Verfahrens ergeben sich aus den Unteransprüchen 12 bis 22.

Die Erfindung betrifft weiterhin die Verwendung einer Bindemittelmischung für die Herstellung von Überzügen, die dadurch gekennzeichnet ist, daß die Mischung aus den Komponenten

A) einem organischen, nicht sauren Harz mit einem Hydroxylgruppengehalt von wenigstens 0,2 Äquivalent in 100 g Harz und mit einem Molekulargewicht von wenigstens 850

B) einem Vernetzungsmittel auf Basis einer organischen Verbindung, die mindestens 2 Carbalkoxymethylestergruppen enthält, besteht.

Vorteilhafte Ausgestaltungen der erfindungsgemäßen Verwendung ergeben sich aus den Unteransprüchen 23 bis 35.

Im folgenden wird die Erfindung anhand von Ausführungsbeispielen näher erläutert.

Beispiel 1

Darstellung eines tetrafunktionellen Vernetzungsmittels (Vernetzer I)

109 g Pentaerythrit werden mit 474 g Phthalsäureanhydrid in einem 4-Halskolben mit Rückflußkühler, Rührer, Innenthermometer und Gaseinleitung vermengt und unter Stickstoff auf 140° C aufgeheizt. Die Reaktion verläuft danach exotherm und wird durch Kühlen bei 160° C gehalten. Bei einer Säurezahl von 305 wird der Ansatz auf Raumtemperatur gekühlt und mit 300 g Aceton versetzt. Danach setzt man 81 g Triethylamin zu und tropft hierzu 98 g Chloressigsäureethylester. Hierauf wird auf Rückflußtemperatur erhitzt. Man hält 4 Stunden die Temperatur und läßt danach den Ansatz abkühlen. Nach 12 h wird das gebildete Triethylammoniumchlorid abfiltriert. Dem Filtrat wird am Rotationsverdampfer das Aceton entzogen.

Beispiel 2

Darstellung eines polyfunktionellen Vernetzers (Vernetzer II)

142 g Trimethylolpropan, 723 g Caprolacton und 600 g Methylisobutylketon werden in einem Reaktionsgefäß vorgelegt und auf Rückflußtemperatur erhitzt. Nach 6 Stunden werden 609 g Trimellitsäureanhydrid zugesetzt. Wenn die Säurezahl 228 erreicht ist, kühlt man auf 50° C ab, gibt weitere 600 g Methylisobutylketon zu und tropft langsam 641 g Triethylamin zu. Durch Kühlung hält man die Temperatur bei 60° C. Dann werden 685 g Chloressigsäuremethylester zugesetzt. Die Reaktion wird 4 Stunden bei 60° C durchgeführt. Hierauf kühlt man auf Raumtemperatur ab und filtriert das entstandene Salz ab. Der Festkörper des Vernetzerharzes liegt bei 70%.

Beispiel 3

Darstellung eines polyfunktionellen Vernetzungsmittels auf Basis eines Polyacrylatharzes (Vernetzer III)

560 g Methylisobutylketon (MIBK) werden unter Stickstoff in einem 5 l Reaktor vorgelegt und auf Rückflußtemperatur erhitzt. Innerhalb von 4,5 Stunden wird eine Monomermischung aus 1400 g Methylmethacrylat, 560 g Carbethoxymethacrylat, 840 g Ethylhexylmethacrylat sowie 14 g Dodecylmercaptan zugetropft. Gleichzeitig wird 140 g tert.-Butylperoctoat in 200 g MIBK zudosiert. Anschließend wird bis zum Erreichen einer konstanten Viskosität von 4,0 dPa · s, 50%ig in MIBK, nachpolymerisiert. Danach wird der Festkörper von 70% mit MIBK eingestellt.

Das zahlenmittlere Molekulargewicht, gemessen durch Gelpermeationschromatographie gegen einen Polystyrolstandard, beträgt 2100.

Beispiel 4

Darstellung einer Bindemitteldispersion I

In einem 4 l Reaktionsgefäß mit Rührer, Stickstoffleitung, Heizung, Thermometer und Rückflußkühler werden 1301 Teile eines handelsüblichen Epoxidharzes auf Basis Bisphenol A mit einem Epoxidäquivalentgewicht von 188, 623 Teile Perhydrobisphenol und 95 Teile Xylol vorgelegt. Hierzu gibt man 9 Teile Dimethylbenzylamin zur Katalyse und erhitzt den Ansatz auf 160° C. Man hält bei dieser Temperatur bis ein Epoxidäquivalentgewicht von 1050 erreicht ist. Dann kühlt man auf 110° C ab und gibt 519 Teile des in Beispiel 1 beschriebenen Vernetzers und 182 Teile Diethanolamin zu. Man hält danach den Ansatz eine Stunde bei 110° C.

Inzwischen bereitet man ein Dispergierbad aus 2634 Teilen entionisiertem Wasser, 52 Teilen Eisessig und 53 Teilen einer handelsüblichen Emulgatorlösung. Hierin wird die Harzlösung dispergiert. Nach $1^1/_2$ Stunden werden weitere 1012 Teile entionisiertem Wasser zugegeben, das man 15 Minuten untermischt.

Die Dispersion weist einen Festkörper von 37,5% auf.

## Beispiel 5

### Darstellung einer Bindemitteldispersion II

In einem 4 l Reaktionsgefäß mit Rührer, Stickstoffleitung, Heizung, Thermometer und Rückflußkühler werden 1132 Teile eines handelsüblichen Epoxidharzes auf Basis Bisphenol A mit einem Epoxidäquivalentgewicht von 188, 564 Teile Polypropylenglykol mit einem Molekulargewicht von 750, 343 Teile Bisphenol A, 133 Teile Xylol und 3 Teile Dimethylbenzylamin. Die Temperatur wird auf 160° C angehoben und gehalten bis ein Epoxidäquivalentgewicht von 670 erreicht ist. Danach kühlt man auf 135° C ab, gibt weitere 6 Teile Dimethylbenzylamin zu und hält die Temperatur bis ein Epoxidäquivalentgewicht von 1250 erreicht ist. Hierauf kühlt man 110° C ab, setzt 615 Teile der in Beispiel 2 beschriebenen Vernetzerlösung und 158 Teile Diethanolamin zu. Die Anlagerungsreaktion führt man 1,5 Stunden durch und gibt dann 171 Teile Phenylglykol zu, die man 15 Minuten untermischt.

Inzwischen bereitet man ein Dispergierbad aus 2248 Teilen entionisiertem Wasser, 52 Teilen einer handelsüblichen Emulgatorlösung und 45 Teilen Eisessig vor. In dieses Dispergierbad wird die Harzlösung eingerührt. Nach einer Stunde fügt man weitere 1532 Teile entionisiertes Wasser zu und mischt unter. Der Festkörper der Dispersion beträgt 37,5%.

## Beispiel 6

### Darstellung einer Bindemitteldispersion III

Der Ansatz von Beispiel 5 wird wiederholt, jedoch fügt man hier 615 Teile der Vernetzerlösung aus Beispiel 3 zu. Das Dispergierbad wird wie in Beispiel 5 zubereitet, jedoch setzt man in der zweiten Zugabe von entionisiertem Wasser 3282 Teile entionisiertes Wasser zu, so daß ein Dispersionsfestkörper von 30% erreicht wird. Diese Dispersion wird nun im Vakuum bei 80° C von den leichtsiedenden Lösungsmitteln durch Destillation befreit. Man destilliert insgesamt 1250 Teile wäßrige und organische Phase ab. Die Dispersion erreicht hierbei einen Festkörper von 35%.

## Beispiel 7

### Darstellung einer grauen Pigmentpaste

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80° C erhitzt. In die Harzlösung werden dann 221 Teile eines Umsetzungsproduktes aus 101 Teilen Diethanolamin und 120 Teilen 80%iger, wäßriger Milchsäure gegeben. Man führt die Reaktion bei 80° C durch bis die Säurezahl unter 1 gefallen ist.

1800 Teile dieses Produkts werden mit 2447 Teilen entionisiertem Wasser vorgelegt und mit 2460 Teilen $TiO_2$, 590 Teilen eines Extenders auf Basis Aluminiumsilikat, 135 Teilen Bleisilikat, 37 Teilen Ruß und 25 Teilen Bleioctoat vermengt. Diese Mischung wird in einem Mahlaggregat auf eine Hegman-Feinheit von 5—7 zerkleinert. Danach gibt man 1255 Teile entionisiertes Wasser zu, um die gewünschte Pastenkonsistenz zu erreichen. Diese graue Paste ist sehr lagerstabil.

Beispiel 8

Zubereitung der Elektrotauchbäder und Abscheidung

500 Gewichtsteile der Bindemitteldispersion werden mit 196 Teilen der im Beispiel 6 beschriebenen Pigmentpaste versetzt und mit entionisiertem Wasser auf einen Badfestkörper von 20% eingestellt. Die Abscheidung der Lackfilme erfolgt während 2 Minuten auf zinkphosphatiertem Blech. Die Badtemperatur beträgt 27° C. Die Filme werden bei 180° C 20 Minuten eingebrannt.

| | Dispersion I | Dispersion II | Dispersion III |
|---|---|---|---|
| Abscheidespannung V | 270 | 290 | 350 |
| Filmdicken µm | 25 | 21 | 17 |
| Gitterschnitt | 0 | 0 | 0 |
| Haftung | sehr gut | sehr gut | sehr gut |
| Biegeprobe | i. O. | i. O. | i. O. |
| Verlauf | gut | sehr gut | gut |

Beispiel 9

Darstellung eines polyfunktionellen Vernetzungsmittels auf Basis eines Acrylatharzes (Vernetzer IV)

Zunächst wird folgendes Monomer hergestellt. 580 g Acrylsäure werden mit 500 g Aceton vermischt. In diese Mischung tropft man 810 g Triethylamin ein. Die Temperatur steigt hierbei auf 50° C an. Man kühlt auf Raumtemperatur und tropft dann 870 g Chloressigsäuremethylester zu. Zuvor hat man 2 g Kaliumjodid als Katalysator in die Ammoniumsalzlösung gegeben. Nach Ende des Zutropfens erhitzt man auf Rückflußtemperatur und hält diese Temperatur für 2 Stunden. Danach läßt man abkühlen und über Nacht stehen und filtriert den entstandenen Niederschlag ab. 480 g der beschriebenen Monomeren werden mit 120 g Methylmethacrylat, 120 g Butylacrylat und 300 g Methylisobutylketon vermischt. Die Monomerenmischung wird mit 19,2 g t-Butylperoctoat versetzt und auf 80° C erhitzt. Die Polymerisation wird während 6 Stunden bei dieser Temperatur durchgeführt. Dann zieht man im Vakuum die Lösungsmittel ab und stellt mit Ethylglykol einen Festkörper von 70% ein.

Beispiel 10

Herstellung einer Bindemitteldispersion IV

In einem geeignet ausgerüsteten 5 l Reaktor werden 1058 g einer 75%igen Epoxidharzlösung (EEW=490) vorgelegt und mit 214 g eines Polyesterdiols aus Neopentylglykol und Adipinsäure (OH-Zahl 210) vermischt und aufgeheizt. Man gibt 2,4 g Dimethylbenzylamin zu und hält die Temperatur bei 135° C bis ein Epoxidäquivalentgewicht von 1130 erreicht ist. Dann kühlt man auf 90° C ab und gibt eine Mischung aus 47 g Methylethanolamin und 59 g einer 72%igen Lösung von Diethylentriamin-bis-methylisobutylketimin in Methylisobutylketon zu. Hierbei tritt eine exotherme Reaktion ein. Man läßt die Temperatur auf 118° C ansteigen und hält sie für eine Stunde. Dann fügt man 90 g Phenylglykol und 540 g des Vernetzers I zu und mischt 15 Minuten unter.

Inzwischen wurde ein Dispergierbad aus 1728 g entionisiertem Wasser, 23 g Eisessig und 40 g einer Emulgatormischung vorbereitet. Hierin wird das Harz dispergiert. Nach einer Stunde fügt man weitere 950 g entionisiertes Wasser zu, mischt 15 Minuten unter und filtriert die Dispersion.

Kenndaten der Dispersion I:

| | |
|---|---|
| Festkörper: | 36,3% (150° C, 30 min) |
| Dichte: | 1,043 |
| pH-Wert: | 6,9 |
| MEQ-Säure: | 0,27 |
| MEQ-Base: | 0,62 |

Beispiel 11

Herstellung einer Bindemitteldispersion V

Man verfährt wie in Beispiel 10, jedoch wird als Vernetzer 772 g des Vernetzungsmittels V zugesetzt. Als Dispergierbad wird folgendes vorgelegt: 1498 g entionisiertes Wasser, 23 g Eisessig und 40 g Emulgatormischung. Nach Zugabe des Harzes verfährt man wie oben.

Kenndaten der Dispersion V:

| | |
|---|---|
| Festkörper: | 36,7% (150° C, 30 min) |
| Dichte: | 1,049 |
| pH-Wert: | 7,1 |
| MEQ-Säure: | 0,26 |
| MEQ-Base: | 0,65 |

Beispiel 12

Herstellung einer Bindemitteldispersion VI

In einem geeignet ausgerüsteten 5 l Reaktor werden 1378 g eines handelsüblichen Epoxidharzes auf Basis Bisphenol A (EEW 188) und 305 g Neopentylglykol vorgelegt. Man erhitzt auf 130° C und fügt 3 g Dimethylbenzylamin zu. Dann hält man, nach Abklingen der exothermen Reaktion, die Temperatur bei 130° C bis ein Epoxidäquivalentgewicht von 1100 erreicht wird. Man kühlt auf 90° C ab, gibt 123 g Diethanolamin und 108 g einer 72,5%igen Lösung von Diethylentriaminbismethylisobutylketimin in Methylisobutylketon zu. Hierbei steigt die Temperatur wieder an. Man hält für eine Stunde die Temperatur bei 115° C und gibt dann 123 g Phenylglykol und 565 g des Vernetzers I zu. Man mischt 15 Minuten unter.

Inzwischen wurde ein Dispergierbad aus 2842 g entionisiertem Wasser, 42 g Eisessig und 49 g einer Emulgatorlösung vorbereitet. Die Säurezahl dieses Bades beträgt 13,8. Hierin wird das Harz dispergiert. Nach einer Stunde gibt man 1555 g entionisiertes Wasser nach, mischt 15 Minuten unter und filtriert die entstandene Dispersion.

Kenndaten der Dispersion IV:

| | |
|---|---|
| Festkörper: | 35,9% (150° C, 30 min) |
| Dichte: | 1,050 |
| pH-Wert: | 7,0 |
| MEQ-Säure: | 0,28 |
| MEQ-Base: | 0,67 |

Beispiel 13

Herstellung einer Bindemitteldispersion VII

Man verfährt wie im Beispiel 12, jedoch wird als Vernetzer 807 g des Vernetzungsmittels IV eingesetzt. Als Dispergierbad wird folgende Mischung vorbereitet. 2600 g entionisiertes Wasser, 42 g Eisessig und 49 g einer Emulgatorlösung. Nach dem Dispergieren des Harzes verfährt man weiter wie bei Beispiel 12.

Kenndaten der Dispersion VII:

| | |
|---|---|
| Festkörper: | 36,3% |
| Dichte: | 1,044 |
| pH-Wert: | 6,9 |
| MEQ-Säure: | 0,30 |
| MEQ-Base: | |

Beispiel 14

Zubereitung der Elektrotauchbäder und Abscheidung

500 Gewichtsteile der Bindemitteldispersionen IV bis VII werden mit 196 Teilen der im Beispiel 7 beschriebenen Pigmentpaste versetzt und mit entionisiertem Wasser auf einen Badfestkörper von 20% eingestellt. Die Abscheidung der Lackfilme erfolgt während 2 Minuten auf zinkphosphatiertem Blech. Die Badtemperatur beträgt 27° C. Die Filme werden bei 180° C 20 Minuten eingebrannt.

| | Dispersion IV | Dispersion V | Dispersion VI | Dispersion VII |
|---|---|---|---|---|
| Abscheidespannung V | 290 | 315 | 300 | 320 |
| Filmdicke µm | 22 | 18 | 21 | 17 |
| Gitterschnitt | 0 | 0 | 0 | 0 |
| Haftung | sehr gut | sehr gut | sehr gut | sehr gut |
| Verlauf | gut | sehr gut | gut | sehr gut |

**Patentansprüche**

1. Hitzehärtbare Bindemittelmischung auf Basis organischer Harze, dadurch gekennzeichnet, daß sie aus den Komponenten

A) einem organischen, nicht sauren Harz mit einem Hydroxylgruppengehalt von wenigstens 0,2 Äquivalent in 100 g Harz und mit einem Molekulargewicht von wenigstens 850 und
B) einem Vernetzungsmittel auf Basis einer organischen Verbindung, die mindestens 2 Carbalkoxymethylestergruppen pro Molekül enthält, besteht.

2. Bindemittelmischung nach Anspruch 1, dadurch gekennzeichnet, daß sie zusätzlich zu den Komponenten A und B als Komponente C Pigmente, Füllstoffe, Vernetzungskatalysatoren, Korrosionsschutzinhibitoren und weitere Lackhilfsmittel enthält.

3. Bindemittelmischung nach den Ansprüchen 1 und 2, dadurch gekennzeichnet, daß der Anteil der Komponente A 50—95 Gew.-% und der der Komponente B 5—50 Gew.-% betragen, wobei die Summe der Komponenten A und B 100% beträgt.

4. Bindemittelmischung nach den Ansprüchen 1 bis 3, dadurch gekennzeichnet, daß die Komponente A eine zahlenmittlere Molmasse von 1000—20 000 aufweist.

5. Bindemittelmischung nach den Ansprüchen 1 bis 4, dadurch gekennzeichnet, daß die Komponente A zusätzlich zu den Hydroxylgruppen Aminogruppen oder Ammoniumgruppen enthält.

6. Bindemittelmischung nach den Ansprüchen 1 bis 5, dadurch gekennzeichnet, daß die Komponente B eine zahlenmittlere Molmasse von 200—10 000 aufweist.

7. Bindemittelmischung nach den Ansprüchen 1 bis 6, dadurch gekennzeichnet, daß die Komponente B ein Polyacrylatharz aus den folgenden Monomeren ist:

a) 10—50 Gew.-% Acrylsäurealkylester mit 1 bis 18 Kohlenstoffatomen im Alkylrest und/oder Methacrylsäureester mit 2 bis 18 Kohlenstoffatomen im Alkylrest,
b) 0—60 Gew.-% Methacrylsäuremethylester,
c) 0—35 Gew.-% Styrol, α-Methylstyrol, o- und/oder p-Chlorstyrol, p-tert.-Butylstyrol, Vinyltoluol und/oder Vinylcarbazol und
d) 2—65 Gew.-% Acrylsäure- und/oder Methacrylsäurecarbalkoxymethylester oder einer anderen Carbalkoxymethylestergruppen enthaltenden, olefinischen, ungesättigten, polymerisierbaren Verbindung, wobei die Summe der Bestandteile a, b, c und d 100% beträgt.

8. Bindemittelmischung nach den Ansprüchen 1 bis 7, dadurch gekennzeichnet, daß sie in feinteiliger, fester Form vorliegt.

9. Bindemittelmischung nach den Ansprüchen 1 bis 7, dadurch gekennzeichnet, daß sie gelöst in einem organischen Lösungsmittel vorliegt.

10. Bindemittelmischung nach den Ansprüchen 5 bis 7, dadurch gekennzeichnet, daß sie nach Protonisierung mit Säure in Form einer wäßrigen Lösung oder Dispersion vorliegt.

11. Verfahren zum Herstellen von Überzügen durch Aufbringen eines Überzugsmittels auf ein Substrat in Form eines Filmes und anschließendes Aushärten des Filmes durch Einbrennen, wobei das Überzugsmittel eine Bindemittelmischung enthält, dadurch gekennzeichnet, daß die Mischung aus den Komponenten

A) einem organischen, nicht sauren Harz mit einem Hydroxylgruppengehalt von wenigstens 0,2 Äquivalent in 100 g Harz und mit einem Molekulargewicht von wenigstens 850 und
B) einem Vernetzungsmittel auf Basis einer organischen Verbindung, die mindestens 2 Carbalkoxymethylestergruppen pro Molekül enthält, besteht.

12. Verfahren nach Anspruch 11, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.

13. Verfahren nach den Ansprüchen 11 bis 12, dadurch gekennzeichnet, daß der Anteil der Komponente A 50—95 Gew.-% und der der Komponente B 5—50 Gew.-% betragen, wobei die Summe der Komponenten A und B 100% beträgt.

14. Verfahren nach den Ansprüchen 11 bis 13, dadurch gekennzeichnet, daß die Komponente A eine zahlenmittlere Molmasse von 1000—20 000 aufweist.

15. Verfahren nach den Ansprüchen 11 bis 14, dadurch gekennzeichnet, daß die Komponente A zusätzlich zu den Hydroxylgruppen Aminogruppen oder Ammoniumgruppen enthält.

16. Verfahren nach den Ansprüchen 11 bis 15, dadurch gekennzeichnet, daß die Komponente B eine zahlenmittlere Molmasse von 200—10 000 aufweist.

17. Verfahren nach den Ansprüchen 11 bis 16, dadurch gekennzeichnet, daß die Komponente B ein Polyacrylatharz aus den folgenden Monomeren ist:

a) 10—50 Gew.-% Acrylsäurealkylester mit 1 bis 18 Kohlenstoffatomen im Alkylrest, und/oder Methacrylsäureester mit 2 bis 18 Kohlenstoffatomen im Alkylrest,
b) 0—60 Gew.-% Methacrylsäuremethylester,
c) 0—35 Gew.-% Styrol, $\alpha$-Methylstyrol, o- und/oder p-tert.-Butylstyrol, Vinyltoluol und/oder Vinylcarbazol und
d) 2—65 Gew.-% Acrylsäure- und/oder Methacrylsäurecarbalkoxymethylester oder einer anderen Carbalkoxymethylestergruppen enthaltenden, olefinisches ungesättigten, polymerisierbaren Verbindung, wobei die Summe der Bestandteile a, b, c und d 100% beträgt.

18. Verfahren nach den Ansprüchen 11 bis 17, dadurch gekennzeichnet, daß das Überzugsmittel in feinteiliger, fester Form vorliegt.

19. Verfahren nach Anspruch 18, dadurch gekennzeichnet, daß das Aufbringen des Überzugsmittels durch eine elektrostatische Pulversprüheinrichtung erfolgt.

20. Verfahren nach den Ansprüchen 11 bis 15, dadurch gekennzeichnet, daß die Bindemittelmischung gelöst in einem organischen Lösungsmittel vorliegt.

21. Verfahren nach Anspruch 20, dadurch gekennzeichnet, daß das Aufbringen des Überzugsmittels durch Spritzen, Tauchen, Fluten, Walzen, Rakeln oder dergleichen erfolgt.

22. Verfahren nach den Ansprüchen 15 bis 17, dadurch gekennzeichnet, daß ein elektrisch leitendes Substrat in ein wäßriges Bad des mindestens teilweise durch Säure neutralisierten Überzugsmittels, das gegebenenfalls zusätzlich organische Lösungsmittel enthält, eingetaucht und als Kathode geschaltet wird, der Film mittels Gleichstrom auf dem Substrat abgeschieden wird, das Substrat aus dem Bad entfernt wird und der Film durch Einbrennen gehärtet wird.

23. Verwendung einer Bindemittelmischung für die Herstellung von Überzügen, dadurch gekennzeichnet, daß die Mischung aus den Komponenten

A) einem organischen, nicht sauren Harz mit einem Hydroxylgruppengehalt von wenigstens 0,2 Äquivalent in 100 g Harz und mit einem Molekulargewicht von wenigstens 850 und
B) einem Vernetzungsmittel auf Basis einer organischen Verbindung, die mindestens 2 Carbalkoxymethylestergruppen pro Molekül enthält, besteht.

24. Verwendung nach Anspruch 23, dadurch gekennzeichnet, daß die Mischung zusätzlich zu den Komponenten A und B als Komponente C Pigmente, Füllstoffe, Vernetzungskatalysatoren, Korrosionsschutzinhibitoren und weitere Lackhilfsmittel enthält.

25. Verwendung nach den Ansprüchen 23 und 24, dadurch gekennzeichnet, daß der Anteil der Komponente A 50—95 Gew.-% und der der Komponente B 5—50 Gew.-% betragen, wobei die Summe der Komponenten A und B 100% beträgt.

26. Verwendung nach den Ansprüchen 23 bis 25, dadurch gekennzeichnet, daß die Komponente A eine zahlenmittlere Molmasse von 1000—20 000 aufweist.

27. Verwendung nach den Ansprüchen 23 bis 26, dadurch gekennzeichnet, daß die Komponente A zusätzlich zu den Hydroxylgruppen Aminogruppen oder Ammoniumgruppen enthält.

28. Verwendung nach den Ansprüchen 23 bis 27, dadurch gekennzeichnet, daß die Komponente B eine zahlenmittlere Molmasse von 200—10 000 aufweist.

29. Verwendung nach den Ansprüchen 23 bis 28, dadurch gekennzeichnet, daß die Komponente B ein Polyacrylatharz aus den folgenden Monomeren ist:

a) 10—50 Gew.-% Acrylsäurealkylester mit 1 bis 18 Kohlenstoffatomen im Alkylrest und/oder Methacrylsäureester mit 2 bis 18 Kohlenstoffatomen im Alkylrest,
b) 0—60 Gew.-% Methacrylsäuremethylester,
c) 0—35 Gew.-% Styrol, α-Methylstyrol, o- und/oder p-Chlorstyrol, p-tert.-Butylstyrol, Vinyltoluol und/oder Vinylcarbazol und
d) 2—65 Gew.-% Acrylsäure- und/oder Methacrylsäure, Carbalkoxymethylester oder einer anderen Carbalkoxymethylestergruppen enthaltenden, olefinischen, ungesättigten polymerisierbaren Verbindung, wobei die Summe der Bestandteile a, b, c und d 100% beträgt.

30. Verwendung nach den Ansprüchen 23 bis 29, dadurch gekennzeichnet, daß die Bindemittelmischung in feinteiliger, fester Form vorliegt.

31. Verwendung der Bindemittelmischung nach Anspruch 30 für Pulverlacke.

32. Verwendung nach den Ansprüchen 23 bis 29, dadurch gekennzeichnet, daß die Bindemittelmischung gelöst in einem organischen Lösungsmittel vorliegt.

33. Verwendung der Bindemittelmischung nach Anspruch 32 für Einbrennlacke.

34. Verwendung nach den Ansprüchen 27 bis 29, dadurch gekennzeichnet, daß die Bindemittelmischung nach Protonisierung mit Säure in Form einer wäßrigen Lösung oder Dispersion vorliegt.

35. Verwendung der Bindemittelmischung nach Anspruch 34 für die kathodische Elektrotauchlackierung.

**Claims**

1. A heat-hardenable binder mixture based on organic resins, which comprises the components

A) an organic nonacidic resin having a hydroxyl group content of at least 0.2 equivalent in 100 g of resin and having a molecular weight of at least 850, and
B) a crosslinking agent based on an organic compound which contains at least 2 carbalkoxymethyl ester groups per molecule.

2. A binder mixture as claimed in claim 1, which, in addition to components A and B, contains, as component C, pigments, fillers, crosslinking catalysts, corrosion inhibitors and further paint assistants.

3. A binder mixture as claimed in claims 1 and 2, wherein the proportion of component A is 50—95% by weight and that of component B is 5—50% by weight, the total amount of components A and B being 100%.

4. A binder mixture as claimed in claims 1 to 3, wherein component A has a number average molecular weight of 1,000—20,000.

5. A binder mixture as claimed in claims 1 to 4, wherein component A, in addition to the hydroxyl groups, contains amino groups or ammonium groups.

6. A binder mixture as claimed in claims 1 to 5, wherein component B has a number average molecular weight of 200—10,000.

7. A binder mixture as claimed in claims 1 to 6, wherein component B is a polyacrylate resin of the following monomers:

a) 10—50% by weight of alkyl acrylate having 1 to 18 carbon atoms in the alkyl radical and/or alkyl methacrylate having 2 to 18 carbon atoms in the alkyl radical,
b) 0—60% by weight of methyl methacrylate,
c) 0—35% by weight of styrene, α-methylstyrene, o- and/or p-chlorostyrene, p-tert.-butylstyrene, vinyltoluene and/or vinylcarbazole and
d) 2—65% by weight of carbalkoxymethyl acrylate and/or methacrylate or of any other olefinically unsaturated, polymerizable compound which contains carbalkoxymethyl ester groups, the total amount of the constituents a, b, c and d being 100%.

8. A binder mixture as claimed in claims 1 to 7, which is in a finely divided, solid form.

9. A binder mixture as claimed in claims 1 to 7, which is in the form of a solution in an organic solvent.

10. A binder mixture as claimed in claims 5 to 7, which, after protonation with acid, is in the form of an aqueous solution or dispersion.

11. A process for preparing coatings by applying a coating agent to a substrate in the form of a film and then hardening the film by baking, which coating agent contains a binder mixture which comprises the mixture of the components

A) an organic nonacidic resin having a hydroxyl group content of at least 0.2 equivalent in 100 g of resin and having a molecular weight of at least 850, and
B) a crosslinking agent based on an organic compound which contains at least 2 carbalkoxymethyl ester groups per molecule.

12. A process as claimed in claim 11, wherein the mixture, in addition to components A and B, contains, as component C, pigments, fillers, crosslinking catalysts, corrosion inhibitors and further paint assistants.

13. A process as claimed in claims 11 and 12, wherein the proportion of component A is 50—95% by weight and that of component B is 5—50% by weight, the total amount of components A and B being 100%.

14. A process as claimed in claims 11 to 13, wherein component A has a number average molecular weight of 1,000—20,000.

15. A process as claimed in claims 11 to 14, wherein component A, in addition to the hydroxyl groups, contains amino groups or ammonium groups.

16. A process as claimed in claims 11 to 15, wherein component B has a number average molecular weight of 200—10,000.

17. A process as claimed in claims 11 to 16, wherein component B is a polyacrylate resin of the following monomers:

a) 10—50% by weight of alkyl acrylate having 1 to 18 carbon atoms in the alkyl radical and/or alkyl methacrylate having 2 to 18 carbon atoms in the alkyl radical,
b) 0—60% by weight of methyl methacrylate,
c) 0—35% by weight of styrene, $\alpha$-methylstyrene, o- and/or p-tert.-butylstyrene, vinyltoluene and/or vinylcarbazole and
d) 2—65% by weight of carbalkoxymethyl acrylate and/or methacrylate or of any other olefinically unsaturated, polymerizable compound which contains carbalkoxymethyl ester groups, the total amount of the constituents a, b, c and d being 100%.

18. A process as claimed in claims 11 to 17, wherein the coating agent is in a finely divided, solid form.

19. A process as claimed in claim 18, wherein te coating agent is applied by means of an electrostatic powder spray device.

20. A process as claimed in claims 11 to 15, wherein the binder mixture is in the form of a solution in an organic solvent.

21. A process as claimed in claim 20, wherein the coating agent is applied by spraying, dipping, flow-coating, roll-coating, knife-coating or the like.

22. A process as claimed in claims 15 to 17, wherein an electrically conductive substrate is dipped into an aqueous bath which has been prepared from the coating agent after at least partial neutralization by acid and which, if appropriate, contains additional organic solvents, and is connected as the cathode, the film is deposited onto the substrate by means of direct current, the substrate is removed from the bath, and the film is hardened by baking.

23. Use of a binder mixture for preparing coatings, wherein the mixture comprises the components

A) an organic nonacidic resin having a hydroxyl group content of at least 0.2 equivalent in 100 g of resin and having a molecular weight of at least 850, and
B) a crosslinking agent based on an organic compound which contains at least 2 carbalkoxymethyl ester groups per molecule.

24. Use as claimed in claim 23, wherein the mixture, in addition to components A and B, contains, as component C, pigments, fillers, crosslinking catalysts, corrosion inhibitors and further paint assistants.

25. Use as claimed in claims 23 and 24, wherein the proportion of component A is 50—95% by weight and that of component B is 5—50% by weight, the total amount of components A and B being 100%.

26. Use as claimed in claims 23 to 25, wherein component A has a number average molecular weight of 1,000—20,000.

27. Use as claimed in claims 23 to 26, wherein component A, in addition to the hydroxyl groups, contains amino groups or ammonium groups.

28. Use as claimed in claims 23 to 27, wherein component B has a number average molecular weight of 200—10,000.

29. Use as claimed in claims 23 to 28, wherein component B is a polyacrylate resin of the following monomers:

a) 10—50% by weight of alkyl acrylate having 1 to 18 carbon atoms in the alkyl radical and/or alkyl methacrylate having 2 to 18 carbon atoms in the alkyl radical,
b) 0—60% by weight of methyl methacrylate,
c) 0—35% by weight of styrene, $\alpha$-methylstyrene, o- and/or p-chlorostyrene, p-tert.-butylstyrene, vinyltoluene and/or vinylcarbazole and
d) 2—65% by weight of carbalkoxymethyl acrylate and/or methacrylate or of any other olefinically unsaturated, polymerizable compound which contains carbalkoxymethyl ester groups, the total amount of the constituents a, b, c and d being 100%.

30. Use as claimed in claims 23 to 29, wherein the binder mixture is in a finely divided, solid form.

31. Use of the binder mixture as claimed in claim 30, for powder finishes.

32. Use as claimed in claims 23 to 29, wherein the binder mixture is in the form of a solution in an organic solvent.

33. Use of the binder mixture as claimed in claim 32, for baking finishes.

34. Use as claimed in claims 27 to 29, wherein the binder mixture, after protonation with acid, is in the form of an aqueous solution or dispersion.

35. Use of the binder mixture as claimed in claim 34, for cathodic elektrocoating.

**Revendications**

1. Mélange de liant thermodurcissable à base de résines organiques, caractérisé par le fait qu'il est formé des constituants suivants:

A) une résine organique non acide ayant une teneur en groupes hydroxyle d'au moins 0,2 équivalent dans 100 g de résine et un poids moléculaire d'au moins 850, et
B) un agent de réticulation à base d'un composé organique qui contient au moins 2 groupes ester de carbalcoxyméthyle par molécule.

2. Mélange de liant selon la revendication 1, caractérisé par le fait qu'il contient, outre les constituants A et B, comme constituant C, des pigments, des charges, des catalyseurs de réticulation, des inhibiteurs protégeant contre la corrosion et d'autres adjuvants pour peintures.

3. Mélange de liant selon les revendications 1 et 2, caractérisé par le fait que la proportion du constituant A est de 50 à 95% en poids et celle du constituant B de 5 à 50% en poids, la somme des constituants A et B étant de 100%.

4. Mélange de liant selon l'une des revendications 1 à 3, caractérisé par le fait que le constituant A présente une masse moléculaire moyenne en nombre de 1000 à 20 000.

5. Mélange de liant selon l'une des revendications 1 à 4, caractérisé par le fait que le constituant A contient, outre les groupes hydroxyle, des groupes amine ou des groupes ammonium.

6. Mélange de liant selon l'une des revendications 1 à 5, caractérisé par le fait que le constituant B présente une masse moléculaire moyenne en poids de 200 à 10 000.

7. Mélange de liant selon l'une des revendications 1 à 6, caractérisé par le fait que le constituant B est une résine de polyacrylate tirée des monomères suivants:

a) 10 à 50% en poids d'ester d'alkyle d'acide acrylique contenant 1 à 18 atomes de carbone dans le radical alkyle et/ou d'ester d'acide méthacrylique contenant 2 à 18 atomes de carbone dans le radical alkyle,
b) 0 à 60% en poids de méthacrylate de méthyle,
c) 0 à 35% en poids de styrène, d'$\alpha$-méthylstyrène, d'o- et/ou p-chlorostyrène, de p-tertiobutylstyrène, de vinyltoluène et/ou de vinylcarbazole, et
d) 2 à 65% en poids d'acrylate et/ou méthacrylate de carbalcoxyméthyle ou d'un autre composé insaturé oléfinique polymérisable contenant des groupes ester de carbalcoxyméthyle, la somme des constituants a), b), c) et d) étant de 100%.

8. Mélange de liant selon l'une des revendications 1 à 7, caractérisé par le fait qu'il se présente sous forme solide en fines particules.

9. Mélange de liant selon l'une des revendications 1 à 7, caractérisé par le fait qu'il se présente à l'état dissous dans un solvant organique.

10. Mélange de liant selon l'une des revendications 5 à 7, caractérisé par le fait qu'après protonisation par un acide, il se présente sous la forme d'une solution ou dispersion aqueuse.

11. Procédé de réalisation de revêtements par application d'un agent de revêtement sur un subjectile, sous la forme d'un feuil et ensuite durcissement du feuil par cuisson, l'agent de revêtement

contenant un mélange de liant, caractérisé par le fait que le mélange est formé des constituants suivants:

A) une résine organique non acide ayant une teneur en groupes hydroxyle d'au moins 0,2 équivalent dans 100 g de résine et un poids moléculaire d'au moins 850, et
B) un agent de réticulation à base d'un composé organique qui contient au moins 2 groupes ester de carbalcoxyméthyle par molécule.

12. Procédé selon la revendication 11, caractérisé par le fait que le mélange contient, outre les constituants A et B, comme constituant C, des pigments, des charges, des catalyseurs de réticulation, des inhibiteurs protégeant contre la corrosion et d'autres adjuvants pour peintures.

13. Procédé selon les revendications 11 et 12, caractérisé par le fait que la proportion du constituant A est de 50 à 95% en poids et celle du constituant B de 5 à 50% en poids, la somme des constituants A et B étant de 100%.

14. Procédé selon l'une des revendications 11 à 13, caractérisé par le fait que le constituant A présente une masse moléculaire moyenne en nombre de 1000 à 20 000.

15. Procédé selon l'une des revendications 11 à 14, caractérisé par le fait que le constituant A contient, outre les groupes hydroxyle, des groupes amine ou des groupes ammonium.

16. Procédé selon l'une des revendications 11 à 15, caractérisé par le fait que le constituant B présente une masse moléculaire moyenne en nombre de 200 à 10 000.

17. Procédé selon l'une des revendications 11 à 16, caractérisé par le fait que le constituant B est une résine de polyacrylate tirée des monomères suivants:

a) 10 à 50% en poids d'ester d'alkyle d'acide acrylique contenant 1 à 18 atomes de carbone dans le radical alkyle et/ou d'ester d'acide méthacrylique contenant 2 à 18 atomes de carbone dans le radical alkyle,
b) 0 à 60% en poids de méthacrylate de méthyle,
c) 0 à 35% en poids de styrène, d'$\alpha$-méthylstyrène, d'o- et/ou p-tertiobutylstyrène, de vinyltoluène et/ou de vinylcarbazole et
d) 2 à 65% en poids d'acrylate et/ou méthacrylate de carbalcoxyméthyle ou d'un autre composé insaturé oléfinique polymérisable contenant des groupes ester de carbalcoxyméthyle, la somme des constiuants a), b), c) et d) étant de 100%.

18. Procédé selon l'une des revendications 11 à 17, caractérisé par le fait que l'agent de revêtement se présente sous forme solide en fines particules.

19. Procédé selon la revendication 18, caractérisé par le fait que l'application de l'agent de revêtement s'effectue au moyen d'un appareil électrostatique de pulvérisation de poudre.

20. Procédé selon l'une des revendications 11 à 15, caractérisé par le fait que le mélange de liant se présente à l'état dissous dans un solvant organique.

21. Procédé selon la revendication 20, caractérisé par le fait que l'application de l'agent de revêtement s'effectue par pulvérisation, immersion, arrosage, au rouleau, à la racle ou de façon similaire.

22. Procédé selon l'une des revendications 15 à 17, caractérisé par le fait que l'on plonge un subjectile conducteur de l'électricité dans un bain aqueux de l'agent de revêtement au moins partiellement neutralisé par un acide, qui contient éventuellement en outre des solvants organiques et qu'on le branche comme cathode, que l'on dépose le feuil sur le subjectile au moyen de courant continu, que l'on retire le subjectile du bain et que l'on durcit le feuil par cuisson.

23. Utilisation d'un mélange de liant pour la réalisation de revêtements, caractérisée par le fait que le mélange est formé des constituants suivants:

A) une résine organique non acide ayant une teneur en groupes hydroxyle d'au moins 0,2 équivalent dans 100 g de résine et un poids moléculaire d'au moins 850 et
B) un agent de réticulation à base d'un composé organique qui contient au moins 2 groupes ester de carbalcoxyméthyle par molécule.

24. Utilisation selon la revendication 23, caractérisée par le fait que le mélange contient, outre les constituants A et B, comme constituant C, des pigments, des charges, des catalyseurs de réticulation, des inhibiteurs protégeant contre la corrosion et d'autres adjuvants pour peintures.

25. Utilisation selon les revendications 23 et 24, caractérisée par le fait que la proportion du constituant A est de 50 à 95% en poids et celle du constituant B de 5 à 50% en poids, la somme des constituants A et B étant de 100%.

26. Utilisation selon l'une des revendications 23 à 25, caractérisée par le fait que le constituant A présente une masse moléculaire moyenne en nombre de 1000 à 20 000.

27. Utilisation selon l'une des revendications 23 à 26, caractérisée par le fait que le constituant A contient, outre les groupes hydroxyle, des groupes amine ou des groupes ammonium.

28. Utilisation selon l'une des revendications 23 à 27, caractérisée par le fait que le constituant B présente une masse moléculaire moyenne en nombre de 200 à 10 000.

29. Utilisation selon l'une des revendications 23 à 28, caractérisée par le fait que le constituant B est une résine de polyacrylate tirée des monomères suivants:

a) 10 à 50% en poids d'ester d'alkyle d'acide acrylique contenant 1 à 18 atomes de carbone dans le radical alkyle et/ou d'ester d'acide méthacrylique contenant 2 à 18 atomes de carbone dans le radical alkyle,
b) 0 à 60% en poids de méthacrylate de méthyle,
c) 0 à 35% en poids de styrène, d'$\alpha$-méthylstyrène, d'o- et/ou p-tertiobutylstyrène, de vinyltoluène et/ou de vinylcarbazole et
d) 2 à 65% en poids d'acrylate et/ou méthacrylate de carbalcoxyméthyle ou d'un autre composé insaturé oléfinique polymérisable contenant des groupes ester de carbalcoxyméthyle, la somme des constituants a), b), c) et d) étant de 100%.

30. Utilisation selon l'une des revendications 23 à 29, caractérisée par le fait que le mélange de liant se présente sous forme solide en fines particules.

31. Utilisation du mélange de liant selon la revendication 30 pour des peintures en poudre.

32. Utilisation selon l'une des revendications 23 à 29, caractérisée par le fait que le mélange de liant se présente à l'état dissous dans un solvant organique.

33. Utilisation du mélange de liant selon la revendication 32 pour des peintures à cuire.

34. Utilisation selon l'une des revendications 27 à 29, caractérisée par le fait que le mélange de liant, après protonisation par un acide, se présente sous la forme d'une solution ou dispersion aqueuse.

35. Utilisation du mélange de liant selon la revendication 34 pour le peinturage cathodique par électrophorèse.